# EUROPEAN PATENT APPLICATION

(11) **EP 4 455 179 A1**
(43) Date of publication of application: **30.10.2024**
(21) Application number: 23170095.6
(22) Date of filing: 26.04.2023
(51) Int. Cl.: C08G 18/42, C08G 18/73, C08G 18/75

(54) **COMPOSITION**

(71) Applicant: Jotun A/S, 3202 Sandefjord (NO)
(72) Inventor: MAI, Hieu Trung, 3138 Skallestad (NO); AUSTLI, Guro Buaas, 3213 Sandefjord (NO)
(74) Representative: Dehns

(57) **Abstract**

The invention relates to a two-component polyurethane coating composition having a VOC of less than 380 g/L when calculated in accordance with ASTM D5201-05a, said composition comprising:
A) a first component comprising:
(i) a branched polyester polyol having a hydroxy value of 500 mgKOH/g or more and a hydroxy functionality of 2 or more, preferably 3 or more;
(ii) a polyester polyol having a hydroxy value of 250 mgKOH/g or more and a hydroxy functionality of 2 or more, preferably 3 or more;
(iii) optionally one or more acrylic polyols having a hydroxy value of at least 50 mgKOH/g; and
(iv) optionally pigments and fillers, preferably 30 to 60 wt% solids, more preferably 40 to 50 wt% solids pigments and fillers, relative to the total (wet) weight of component A); and

B) a second component comprising a polyisocyanate;
wherein polyester polyols (i) and (ii) are different.

## Description

### Field of the Invention

This invention relates to coating compositions, in particular to a coating composition which finds application as a topcoat for coating systems that prevent corrosion, erosion, and other forms of damage caused by exposure to harsh environmental conditions such as rain, saltwater, UV radiation, extreme temperatures as well as chemicals such as detergents, etc. The invention further relates to substrates and articles coated with the coating composition and to the use of the coating composition in coating articles.

### Background

Coatings for marine and protective applications are used to provide a protective and aesthetic layer to various surfaces, including metal, concrete, and wood. These coatings are designed to prevent corrosion, erosion, and other forms of damage caused by exposure to harsh environmental conditions such as rain, saltwater, UV radiation, and extreme temperatures.

In the marine industry, maintenance coatings are used to repair or further protect the surfaces of ships, boats, and other marine equipment that have previously been coated. These coatings are typically applied to surfaces that are showing signs of wear and tear or that have been damaged due to exposure to harsh environmental conditions such as UV radiation, saltwater, and abrasion. Maintenance coatings are available in a variety of colours and finishes to match the existing coating system.

In the protective coatings industry, maintenance coatings are used to repair or further protect industrial surfaces such as pipelines, storage tanks, and bridges that have previously been coated. These coatings are typically applied to surfaces that have been damaged due to exposure to harsh environmental conditions such as corrosive chemicals, moisture, and extreme temperatures.

Maintenance coatings are in general available in a variety of formulations, including epoxides, polyurethanes, and acrylics, and can be applied using various techniques, including spray, brush, and roller.

Durable anticorrosive coatings are typically based on 2-component BPA-epoxides. However, a topcoat is necessary to maintain a nice colour and gloss during the lifetime of the object due to the rapid degradation of epoxides when exposed to UV irradiation. Durable anticorrosive coatings ensure long-lasting anticorrosive performance with minimum maintenance and a nice appearance over time when overcoated with a topcoat. The topcoat is the outermost layer of the coating system and is the firsthand protection of the coating system due to these outer exposures in addition to adding aesthetic durability, by providing low dirt pick up and long lasting colour and gloss retention, to the coating system.

In general, the complexity of 2-component coatings demands some skills from the paint applicator. If the wrong mix ratio is used, or the application takes place after pot life has ended this may cause paint failures like softness, matting, flaking, etc. This is particularly relevant, e.g. for onboard maintenance and repair coatings or sea-stock paints used to protect a vessel during a voyage following an onboard maintenance plan, where a durable, high-gloss finish is required in aggressive atmospheric exposures, but also to protect industrial plants or buildings, oil and gas installations, etc. Such maintenance helps to reduce long-term paint consumption and maintenance costs and the ship's crew/workers will spend less time on paint works. Such paints should be easy to stock, mix and apply by brush and roller for the applicator. Failure to apply the coating correctly will impact both the protection of the vessel and Health, Safety, and Environment (HSE).

Today's coating compositions also require the compositions to have high solids content and low volatile organic content (VOC). This must be balanced with a suitable pot life, drying time, and storage stability of the coating composition. Furthermore, the coating composition should not be too expensive.

Polyurethanes are routinely used in topcoat coating compositions. Polyurethane coatings also have a wide usage in the automobile industry, particularly as clear coats. Clear coats lack pigments and fillers and give transparent or translucent coatings that provide a protective layer while allowing the colour or texture of the substrate to show through. Also, in the car industry, clear coats are typically sprayed on top of a pigmented basecoat or topcoat. Pigmented coatings, on the other hand, are opaque coatings that contain pigments to provide colour and hiding power. They are used to enhance the appearance of a substrate, cover up imperfections or stains, and provide additional protection against weathering and other environmental factors. Therefore, clear coats are unsuitable as maintenance paints for protective and marine applications as colour is needed in order to match the existing coating system. It can improve hiding power so that the coating can effectively cover up stains, blemishes, and imperfections on a substrate, providing a more uniform and attractive appearance. Pigmented coatings can help protect surfaces from scratches, abrasions, and other types of physical damage.

Existing polyurethane topcoats generally comprise polyisocyanates (HDI and IPDI), acrylic polyols, and/or polyester polyols. Such polyurethane coatings often have good basic properties for use as a topcoat, but are typically formulated to have mixing ratios in the range 3:1 to 10:1 by volume to meet stoichiometric ratios.

A 2-component topcoat having a 1:1 mixing ratio by volume is easy to mix correctly and therefore helps to avoid any paint failure. Using a simple mix ratio also makes it easier to mix the exact amount of paint needed for the painting and will therefore contribute to reducing wastage, thus saving the environment, time and money. These 2-component coating compositions are typically used as a topcoat applied by brush or roller over epoxy primers where a durable, high-gloss finish is required in aggressive atmospheric exposures. Since the topcoat typically is the outer coating layer exposed to weather, but also to washing and spill from chemicals, the chemical resistance and early water resistance properties are important to retain gloss and colour over time. Also, excellent weatherability and robustness towards UV exposure, chemicals, and mechanical impact (hardness) are important to obtain a long maintenance interval while retaining a nice colour and gloss over time. However, it is challenging to make a coating composition having a 1:1 mixing ratio by volume and still be able to obtain a good balance of desirable properties.

To achieve a 1:1 mixing ratio by volume the volume of the component comprising the polyisocyanate needs to be increased. Or, alternatively, the volume of the component comprising the binder(s) need to be decreased.

A 1: 1 mixing ratio by volume could be achieved by transferring some of the dry raw materials e.g. pigments, extenders etc. to the component comprising the curing agent. This is technically challenging due to the reactivity of polyisocyanates. There tend to be traces of water present in the weather resistant grades of TiO₂ and extenders that will react with polyisocyanate during production and storage. Introducing pigments and extenders that require grinding in the curing agent will also increase the risk of introducing moisture due to longer production time using standard paint production equipment where no inert atmosphere is present.

An alternative would be to dilute the curing agent using solvent, but that would lead to an undesired increase in VOC which is clearly unacceptable, e.g. from an HSE perspective.

Decreasing the binder by volume in the component containing polyols to achieve the 1:1 volumetric mix ratio, will result in either too high VOC or pigment volume concentration (PVC) if replacement is done by solvents or extenders respectively. A too high PVC will reduce gloss and increase permeability, hence reducing chemical resistance and early water resistance.

A further option would be to increase the amount of the curing agent, however this poses disadvantages in terms of costs and has further health implications as polyisocyanates can be toxic. Additionally, it will lead to a low PVC, and will reduce hiding power and durability, hence reduce UV resistance and hardness.

Achieving 1: 1 mixing ratio for a paint composition by using only acrylic polyols cured with HDI or IPDI polyisocyanates is further technically challenging due to the low OHV value of acrylic polyols alone. There is a need for using polyols having higher OHV value, like e.g. polyester polyols. Acrylic polyols could be used in a lower ratio together with the higher functional polyol, but preferably not alone.

It is possible to formulate a 2-component topcoat using an acrylic polyol with a high hydroxy value and a polyester polyol with relatively higher hydroxy value. However, previous such coatings have been found to insufficiently protect the underlaying anti-corrosive epoxy coating, as they lack important properties such as early water resistance and robustness towards UV exposure, which is a must for a weather exposed, outdoor topcoat.

The concept of achieving stoichiometric 1: 1 mixing ratio by volume could be to match high mol of OH functional group in the component containing polyols with high mol NCO functional groups in the polyisocyanate containing component, hence mol/L OH functional group should be equal to mol/L NCO functional group.

The disadvantage of using only high OHV (polyester) polyol is that it needs a too high volume of the component containing curing agents to achieve a 1:1 mixing ratio by volume.

It is clear that there thus remains the need for developing new strategies for providing coating compositions for application as topcoats which offer the possibility to be employed with a 1:1 mixing ratio.

It is therefore an object of the present invention to provide a new two-component coating composition which can be employed in a close to, or preferably in a 1:1 mixing ratio by volume. Naturally, in addition to this target, it is an aim for the new composition to possess good adhesion to primer layers, such as epoxy primers, in both low and high humidity environments, good weathering resistance, early water resistance and robustness towards UV exposure. Ideally, the coating will also display good mechanical impact (e.g. hardness) and chemical resistance properties. Furthermore, it is desirable for the composition to have high solids content and low VOC. This must be balanced with a suitable pot life, drying time, and storage stability of the coating composition. Ideally, the composition possesses several of these properties. The present inventors have surprisingly found that a two-component polyurethane composition as defined herein offers an attractive solution.

### Summary

Thus, in a first aspect, the invention provides a two-component polyurethane coating composition having a VOC of less than 380 g/L when calculated in accordance with ASTM D5201-05a, said composition comprising:
A) a first component comprising:
   (i) a branched polyester polyol having a hydroxy value of 500 mgKOH/g or more and a hydroxy functionality of 2 or more, preferably 3 or more;
   (ii) a polyester polyol having a hydroxy value of 250 mgKOH/g or more and a hydroxy functionality of 2 or more, preferably 3 or more;
   (iii) optionally one or more acrylic polyols having a hydroxy value of at least 50 mgKOH/g; and
   (iv) optionally pigments and fillers, preferably 30 to 60 wt% solids, more preferably 40 to 50 wt% solids pigments and fillers, relative to the total (wet) weight of component A); and
B) a second component comprising a polyisocyanate; wherein polyester polyols (i) and (ii) are different.

In a second aspect, the invention provides a coating system comprising at least two layers A and B, wherein said layers A and B are adjacent and wherein layer A comprises an organic-based coating that includes at least one epoxy resin or a polyurethane resin; and wherein layer B comprises a top coat composition comprising the two-component polyurethane coating composition as hereinbefore defined.

In a further aspect, the invention provides a substrate having coated thereon a coating composition as hereinbefore defined, or a coating system as hereinbefore defined which has been allowed to dry and/or cure.

In another aspect, the invention provides a process for coating a substrate, comprising applying, preferably by brush or roller, to said substrate a two-component polyurethane coating composition having a VOC of less than 380 g/L when calculated in accordance with ASTM D5201-05a said composition comprising:
A) a first component comprising:
   (i) a branched polyester polyol resin having a hydroxy value of 500 mgKOH/g or more and a hydroxy functionality of 2 or more;
   (ii) a polyester polyol resin having a hydroxy value of 250 mgKOH/g or more and a hydroxy functionality of 2 or more; and
   (iii) optionally one or more acrylic polyol resins having a hydroxy value of at least 50 mgKOH/g; and
B) a second component comprising a polyisocyanate; wherein polyester polyols (i) and (ii) are different;
   and allowing said composition to dry and/or cure.

In another aspect, the invention provides the use of coating composition as hereinbefore defined or a coating system as hereinbefore defined, for protecting a substrate, e.g. from corrosion.

In a further aspect, the invention provides the use of a coating composition as hereinbefore defined for maintenance and/or as a topcoat.

### Detailed Description

This invention relates to a coating composition that can be used to coat a substrate, in particular metal substrates coated with an organic coating. The coating composition is a two-component polyurethane coating comprising a first component A) and a second component B). The first component comprises: a branched polyester polyol (i), a polyester polyol (ii) optionally, an acrylic polyol (iii) and optionally, pigments and fillers (iv). The second component comprises a polyisocyante curing agent.

### Definitions

By "polyester polyol" we mean any polymer which contains more than one ester functional group as well as more than one hydroxy functional group.

By "epoxy resin" we mean any polymer which contains one or more epoxide moieties.

Where "molecular weight" is quoted for a particular component, we refer to the theoretical value for the molecular weight of the ideal molecule. It is typically used for small molecules.

Where "number average molecular weight (*M*ₙ)" is calculated by summing the molecular weights of all polymer chains in a sample and dividing by the total number of chains. Where "weight-average molecular weight (*M_{w}*)" is calculated by summing the product of the molecular weight and the weight fraction of each polymer chain in the sample, and then dividing by the total weight of all the chains. *M*ₙ and M_{w} are values obtained analytically, e.g., via end-group analysis or gel permeation chromatography (GPC).

By "curing" in the context of the present invention, it is meant the chemical process by which the coating undergoes a chemical reaction, often with a curing agent or crosslinker, to form a more stable and durable film.. It will be understood that the curing reaction may not always be complete, for example, there may be unreacted functional groups, such as isocyanate groups, remaining after "curing" has taken place. Thus, by "curing", "cured" or "allowing to cure" we cover both the scenarios of partial and complete curing.

By "dry" in the context of the present invention, it is meant the state in which the solvent has evaporated and the coating has formed a solid film on the substrate.

By "maintenance" in the context of the present invention, it is meant, particularly for marine and protective applications, to preserve, maintain and extend the life of previously applied coatings. Maintenance coatings are typically applied as topcoats to an existing coating system to improve its appearance, durability, and performance.

### First component A)

### Branched Polyester Polyol (i)

The branched polyester polyol (i) has an hydroxy value (OHV) of 500 mgKOH/g or more, based on non-volatiles and may thus be termed a "high OHV" polyester polyol. Moreover, the "polyester polyol" contains at least two hydroxyl (OH) functional groups, i.e. has a hydroxy functionality of 2 or more.

Typically, the OHV of the branched polyester polyol (i) is in the range 500 to 800 mgKOH/g, such as 500 to 650 mgKOH/g.

The functionality of the polyester polyol (i.e. the number of hydroxyl groups present per molecule) is preferably 3 or more. Possible ranges for the hydroxy functionality are 2 to 10, such as 3 to 8.

Preferably, the branched polyester polyol (i) is one comprising the following repeating unit: 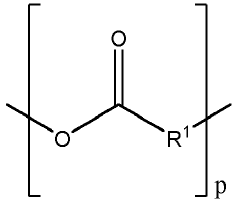 wherein R¹ is selected from the group consisting of branched C₁₋₂₀ alkyl groups, C₃₋₁₂ cycloalkyl groups, and optionally substituted C₆₋₂₀ aryl groups; and p is an integer from 2 to 50.

Preferably, R¹ is a branched C₁₋₂₀ alkyl group. The term "alkyl" is intended to cover alkyl groups such as propyl, butyl, pentyl and hexyl. Particularly preferable alkyl groups are pentyl and hexyl. It will be understood that the "alkyl" group in the context of the polyester polyol is divalent and thus may also be referred to as "alkylene".

In one particularly preferred embodiment, R¹ is C₁₋₆alkyl.

Particularly preferred cycloalkyl groups include cyclopentyl and cyclohexyl.

Examples of the substituted aryl groups include aryl groups substituted with at least one substituent selected from halogens, alkyl groups having 1 to 8 carbon atoms, acyl groups, or a nitro group. Particularly preferred aryl groups include substituted and unsubstituted phenyl, benzyl, phenalkyl or naphthyl.

Preferably, p is an integer in the range 2 to 25, such as 2 to 20, e.g. 3 to 15.

The number average molecular weight (Mn) of the polyester polyol is preferably between 200 and 20,000, such as 500 to 10,000, (determined by GPC).

The branched polyester polyol (i) of the invention preferably has a hydroxyl number of 500-700, such as 520-600, e.g 525-550 mg KOH/g (calculated on non-volatiles).

The viscosity of the branched polyester polyol at 23°C may range from 10 mPa·s to 20,000 mPa·s (10 to 20,000 cP), such as 100 mPa·s to 15,000 mPa·s (100 to 15,000 cP), especially 500 mPa s to 10,000 mPa·s (500 to 10000 cP).

In a particularly preferred embodiment, the branched polyester polyol (i) is a a branched polyether/polyester polyol.

The term polyether/polyester polyol refer to polymers comprising both polyether units and polyester units in their molecular chain. These polyols have higher hydrolysis stability than corresponding polyester polyols while at the same time possessing the hydrophobic properties of polyesters. This generally leads to reduced water absorption and improved resistance to hydrolysis of the final coatings.

The branched polyether/polyester polyol is a copolymer of polyether blocks and polyester blocks. This structure may provide improved hardness to the cured film as compared to polyesters.

The branched polyether/polyester polyol ideally has a low content of acid groups, such as an acid value of 5 mg/KOH/g or less as measured in accordance with DIN EN ISO 660 preferably the acid value is below 2 mgKOH/g.

It is also desired that the branched polyether/polyester polyol has a low viscosity, such as a viscosity of 1500-3500 mPa.s (20°C) as measured by ISO 2555 (MOD.), preferably a viscosity of 2000-2600 mPa.s (20°C).

High OHV branched polyester polyols can be purchased commercially. Commercial suppliers include BASF and suitable polyether/polyester polyols are sold under trade names such as Sovermol. A particular example of a suitable commercially available polyether/polyester polyol is Sovermol 780.

The branched polyester polyol (i) is preferably present in an amount of 5 to 25 wt% solids, more preferably 8 to 20 wt% solids, relative to the total (wet) weight of the first component A).

The branched polyester polyol (i) is preferably present in an amount of 5 to 25 wt% solids, more preferably 8 to 23 wt% solids, relative to the total dry weight of the first component A).

Whilst it is within the ambit of the invention for the coating composition, specifically component A) of the coating composition, to comprise a mixture of two or more branched polyester polyol (i), it is preferred if only a single branched polyester polyol (i) as hereinbefore defined is present. Where a mixture of two or more is present, it will be understood that the above mentioned wt% values refer to the total amount of all branched polyester polyols (i) present.

### Polyester Polyol (ii)

The polyester polyol (ii) has a hydroxy value (OHV) of 250 mgKOH/g or more, based on non-volatiles and may thus be termed a "medium OHV" polyester polyol. Moreover, the "polyester polyol" contains at least two hydroxyl (OH) functional groups, i.e. has a hydroxy functionality of 2 or more.

Typically, the OHV of the polyester polyol (ii) is in the range 250 to 500 mgKOH/g, such as 260 to 400 mgKOH/g. In all embodiments, the OHV of the polyester polyol (ii) is ideally lower than the OHV of the branched polyol polyester (i).

The functionality of the polyester polyol (i.e. the number of hydroxyl groups present per molecule) is preferably 3 or more. Possible ranges for the hydroxy functionality are 2 to 10, such as 3 to 8.

Preferably, the polyester polyol (ii) is one comprising the following repeating unit: 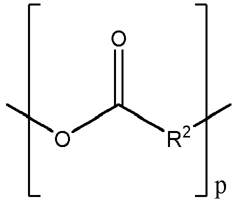 wherein R² is selected from the group consisting of linear or branched C₁₋₂₀ alkyl groups, C₃₋₁₂ cycloalkyl groups, and optionally substituted C₆₋₂₀ aryl groups; and p is an integer from 2 to 50.

Preferably, R² is a linear or branched C₁₋₂₀ alkyl group. The term "alkyl" is intended to cover linear or branched alkyl groups such as propyl, butyl, pentyl and hexyl. The alkyl group is preferably branched. Particularly preferable alkyl groups are pentyl and hexyl. It will be understood that the "alkyl" group in the context of the polyester polyol is divalent and thus may also be referred to as "alkylene".

In one particularly preferred embodiment, R² is C₁₋₆alkyl.

Particularly preferred cycloalkyl groups include cyclopentyl and cyclohexyl.

Examples of the substituted aryl groups include aryl groups substituted with at least one substituent selected from halogens, alkyl groups having 1 to 8 carbon atoms, acyl groups, or a nitro group. Particularly preferred aryl groups include substituted and unsubstituted phenyl, benzyl, phenalkyl or naphthyl.

Preferably, p is an integer in the range 2 to 25, such as 2 to 20, e.g. 3 to 15.

The weight average molecular weight (Mw) of the polyester polyol is preferably between 200 and 2500 g/mol, more preferably 250 to 2100 g/mol such as 290 to 1900 g/mol, (determined by GPC).

The polyester polyol (ii) of the invention preferably has a hydroxyl number of 250-600, more preferably 275-580, such as 275-330, e.g. 280-310 mg KOH/g (calculated on non-volatiles). Preferably, the hydroxyl number for the polyester polyol (ii) should be less than the hydroxyl number for the branched polyester polyol (i).

The viscosity of the polyester polyol (ii) at 60°C may range from 100 to 250 mPa.s, preferably 130 to 190 mPa.s. The polyester polyol (ii) may have viscosity from 1000 to 5000 mPa.s at 23°C, preferably 1100 to 4500 mPa.s.

In a preferred embodiment, the polyester polyol (ii) is a branched polyester polyol or a hyperbranched polyester polyol. The person skilled in the art will understand that by "hyperbranched" we mean than the polyester polyol comprises highly branched molecular structure (e.g. comprising more than 4 branches), as opposed to the linear structure of traditional polyester resins.

Particularly preferred polyester polyols (ii) are polylactone polyols, especially polycaprolactone polyols. Polycaprolactone polyols may advantageously provide good stability to hydrolysis and good low-temperature properties to the polyurethane coating films formed. The most preferred polyols are those having at least three hydroxyl groups, i.e., those capable of cross-linking reactions, in particular polyester triols, and above all, polycaprolactone triols comprising the following structure: 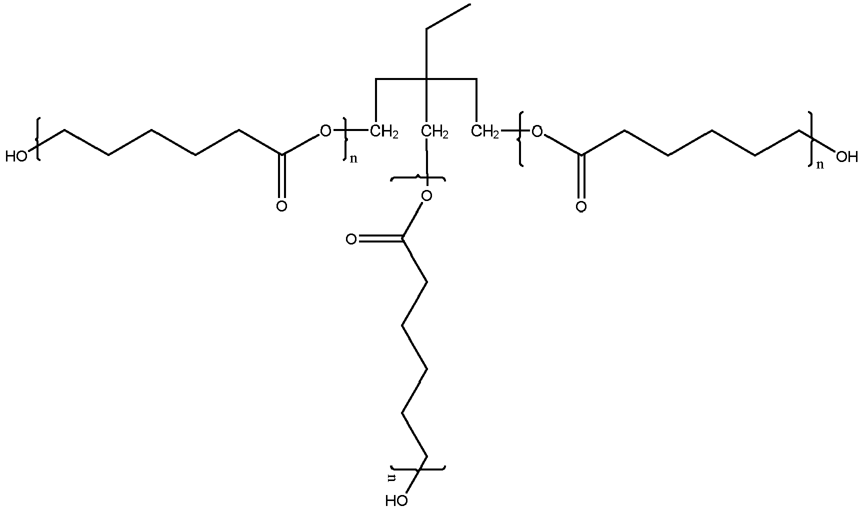 wherein n is 1 to 7, the Mw of the structure is 300 to 2000 g/mol and the OH content is 4.1 to 17%.

Most preferred is low molecular weight branched polyester triol derived from ε-caprolactone.

The polyester polyol (ii) ideally has a low to moderate content of acid groups, such as an acid value below 90 mg/KOH/g calculated based on non-volatiles.

Medium OHV polyester polyols can be purchased commercially. Commercial suppliers include Ingevity and BASF and suitable polyester polyols are sold under trade names such as CAPA and Basanol. Particular examples of suitable commercially available polyester polyols are CAPA 3050, and Basonol HPE 1170.

The polyester polyol (ii) can be provided as a pure substance or in solution. The polyester polyol (ii) is preferably present in an amount of 2 to 40 wt% solids, more preferably 2.5 to 30 wt% solids, relative to the total (wet) weight of the first component A). In particular, for those embodiments wherein an acrylic polyol (iii) is not present in the coating composition, the polyester polyol (ii) is typically present in an amount of 12 to 35 wt% solids, such as 15 to 30 wt% solids, relative to the total (wet) weight of the first component A). In those embodiments wherein one or more acrylic polyols (iii) are present in the coating composition, the polyester polyol (ii) is typically present in an amount of 2 to 15 wt% solids, such as 2.5 to 10 wt% solids, relative to the total (wet) weight of the first component A).

The polyester polyol (ii) is preferably present in an amount of 1 to 45 wt% solids, more preferably 2 to 37 wt% solids, relative to the total dry weight of the first component A). In particular, for those embodiments wherein an acrylic polyol (iii) is not present in the coating composition, the polyester polyol (ii) is typically present in an amount of 10 to 45 wt% solids, such as 17 to 37 wt% solids, relative to the total dry weight of the first component A). In those embodiments wherein one or more acrylic polyols (iii) are present in the coating composition, the polyester polyol (ii) is typically present in an amount of 1 to 17 wt% solids, such as 2 to 12 wt% solids, relative to the total dry weight of the first component A).

Whilst it is within the ambit of the invention for the coating composition, specifically component A) of the coating composition, to comprise a mixture of two or more polyester polyols (ii), it is preferred if only a single polyester polyol (ii) as hereinbefore defined is present. Where a mixture of two or more is present, it will be understood that the above mentioned wt% values refer to the total amount of all polyester polyols (ii) present.

### Acrylic Polyol (iii)

By "acrylic polyol" we mean any polyol which is prepared from two or more acrylate monomers. Moreover, the "acrylic polyol" contains at least two hydroxyl (OH) functional groups.

The acrylic polyol is an optional component of the coating compositions of the invention. However, in one embodiment, the presence of the acrylic polyol is preferred. The presence of the acrylic polyol may advantageously contribute to the hardness and chemical resistance of the coating composition.

In one embodiment of the invention, only a single acrylic polyol is used. In an alternative and preferable embodiment, a mixture of two or more acrylic polyols are used. Most preferred is the use of two acrylic polyols.

The acrylic polyol is not particularly restricted but may be any acrylic polyol having reactivity with a polyisocyanate and examples thereof may include compounds obtained by polymerization of a mixture of unsaturated monomers selected from unsaturated monomers containing a hydroxyl group, unsaturated monomers containing an acid group, and other unsaturated monomers.

The above-mentioned unsaturated monomers containing a hydroxyl group is not particularly restricted and examples thereof may include hydroxyethyl acrylate, hydroxyethyl methacrylate, hydroxypropyl methacrylate, hydroxybutyl acrylate, Placcel FM-1 (manufactured by Daicel Chemical Industries; ε-caprolactone-modified hydroxyethyl methacrylate), polyethylene glycol monoacrylate or monomethacrylate, and polypropylene glycol monoacrylate or monomethacrylate.

The above-mentioned unsaturated monomer containing an acid group is not particularly restricted and examples thereof may include carboxylic acids such as acrylic acid, methacrylic acid, itaconic acid, crotonic acid, and maleic acid.

The above-mentioned other unsaturated monomers are not particularly restricted and examples thereof may include acrylic monomers containing an ester group such as methyl acrylate, ethyl acrylate, propyl acrylate, butyl acrylate, hexyl acrylate, ethylhexyl acrylate, or lauryl acrylate or methacrylate esters; vinylalcohol ester type monomers such as esters of carboxylic acids, e. g. acetic acid and propionic acid with vinyl alcohol; unsaturated hydrocarbon monomers such as styrene, α-methylstyrene, vinylnaphthalene, butadiene, and isoprene; nitrile type monomers such as acrylonitrile and methacrylonitrile; and acrylamide type monomers such as acrylamide, methacrylamide, N-methylolacrylamide, N,N-dimethylacrylamide, and diacetoneacrylamide.

In one embodiment, the acrylic polyol is one comprising the following repeating unit: 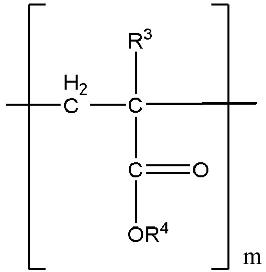 wherein R³and R⁴ may be the same or different, preferably different, and are each independently selected from the group consisting of hydrogen, linear or branched C₁₋₂₀ alkyl groups, linear or branched hydroxyC₁₋₂₀alkyl groups, C₃₋₁₂ cycloalkyl groups, and optionally substituted C₆₋₂₀ aryl groups; and m is an integer from 2 to 50.

Preferably, R³ and R⁴ are each independently hydrogen, a linear or branched C₁₋₂₀ alkyl group or a linear or branched hydroxyC₁₋₂₀alkyl. The term "alkyl" is intended to cover linear or branched alkyl groups such as methyl, ethyl, propyl, butyl, pentyl and hexyl. Particularly preferable alkyl groups are methyl, pentyl and hexyl. In all embodiments, the alkyl group is preferably linear.

Preferably, R³ is hydrogen or C₁₋₆alkyl, e.g. methyl.

Preferably, R⁴ is hydrogen, C₁₋₆alkyl or hydroxyC₁₋₆alkyl.

Particularly preferred cycloalkyl groups include cyclopentyl and cyclohexyl.

Examples of the substituted aryl groups include aryl groups substituted with at least one substituent selected from halogens, alkyl groups having 1 to 8 carbon atoms, acyl groups, or a nitro group. Particularly preferred aryl groups include substituted and unsubstituted phenyl, benzyl, phenalkyl or naphthyl.

Preferably, m is an integer in the range 2 to 25, such as 2 to 20, e.g. 2 to 15.

In one embodiment, only a single (i.e. one type of) repeating unit is present. In an alternative embodiment, more than one, e.g. two, different repeating units are present. If different repeating units are present they may have a random or a regular distribution within the acrylic polyol. It will be understood that where more than one repeating unit is present, these repeating units will differ in at least one of R³ and R⁴.

The number average molecular weight (Mn) of the acrylic polyol is preferably between 200 and 20,000 (determined by GPC).

The functionality of the acrylic polyol (i.e. the number of hydroxyl groups present per molecule) may range from 2 to 10.

The viscosity at 23°C of the acrylic polyol may range from 10 mPa·s to 20,000 mPa·s (10 to 20,000 cP), such as 100 mPa·s to 15,000 mPa·s (100 to 15,000 cP), especially 500 mPa·s to 12,000 mPa·s (500 to 12000 cP). The viscosity may be measured on the pure acrylic polyol or the acrylic polyol in solution. Preferably, the viscosity is measured for the acrylic polyol in butyl acetate, such as a 50-100wt% of the acrylic polyol in butyl acetate, e.g. 75 wt% in butyl acetate.

Acrylic polyol or polyacrylate polyols should ideally have a hydroxyl value of at least 50 mgKOH/g. A preferable range for the hydroxy value is 50 to 150 mgKOH/g. When two or more acrylic polyols are present, they may have the same or different hydroxy values. For example, the first acrylic polyol may have an hydroxy value of at least 50 mgKOH/g and the second acrylic polyol may have an hydroxy value of at least 90 mgKOH/g.

The acrylic polyols preferably have a low content of acid groups, such as an acid value of 12 mgKOH/g or less as measured in accordance with DGF C-V2, preferably the acid value is below 10 mgKOH/g.

The glass transition temperature (Tg) of acrylic polyol should be 5 °C or higher based on calculation using the Fox equation. If two or more acrylic polyols are present their glass transition temperature might differ. Preferably Tg is above 10 °C based on calculation using the Fox equation.

Acrylic polyols for use in the invention can be purchased commercially. Commercial suppliers include Covestro, Allnex, Arkema, and Cray Valley and suitable acrylic polyols are sold under trade names such as Macrynal, Setalux, Synocure and Uracron. Particular examples of suitable commercially available acrylic polyols are Macrynal SM 2810/75BAC, Setalux 1914, Setalux 1907, Setalux 1909, Synocure 580 BA 75, Synocure 865 EEP 70, Synocure 854 BA80, Synocure 9256 X70 and Uracron CY240 EF-75.

The acrylic polyol (iii) is preferably present in an amount of 0 to 35 wt% solids, more preferably 2 to 30 wt% solids, more preferably 4 to 25 wt% solids, relative to the total (wet) weight of the first component A).

The acrylic polyol (iii) is preferably present in an amount of 0 to 30 wt% solids, more preferably 8 to 29 wt% solids, more preferably 10 to 28 wt% solids, relative to the total dry weight of the first component A).

As discussed above, it is within the ambit of the invention for the coating composition, specifically component A) of the coating composition, to comprise a mixture of two or more acrylic polyols (iii). In such embodiments, it will be understood that the above mentioned wt% values refer to the total amount of all acrylic polyols (iii) present.

### Second component B)

### Polyisocyanate

The coating compositions of the invention also comprise at least one polyisocyanate. The polyisocyanate(s) is present in the second component B). The function of the polyisocyanate is as a curing agent.

In the context of the present invention, it is possible to use aliphatic, cycloaliphatic or aromatic polyisocyanates, such as hexamethylene diisocyanate (HDI), trimethylhexamethylene diisocyanate, isophorone diisocyanate, 4,4'-diisocyanatodicyclohexylmethane, tolylene-2,4-diisocyanate, o-, m- and p-xylylene diisocyanate, 4,4'-diisocyanatodiphenylmethane; and also, for example, polyisocyanates containing biuret, allophanate, urethane or isocyanurate groups.

Aliphatic polyisocyanates are preferred.

Polyisocyanates based on hexamethylene diisocyanate (HDI) and isophorone diisocyanate (IPDI) are particularly preferred, especially HDI.

The at least one polyisocyanate can be in any form, including but not limited to, dimer, trimer, isocyanurate, adducts, polymeric and prepolymer isocyanate, Polyisocyanate trimers are particularly preferred.

The NCO content of the polyisocyante is preferably 5-35%, more preferably 8 to 30%, such as 10 to 25%.

The at least one polyisocyanate is preferably present in the total coating composition (A+B) of the invention in a range of 10 to 45 wt% solids, such as 12 to 40 wt% solids, e.g. 15 to 35 wt% solids, relative to the total (wet) weight of coating composition. It will be appreciated that where more than one polyisocyanate is present in the coating compositions, the hereinbefore quoted wt% ranges relate to the total amount of all polyisocyanates employed. Where a mixture of two polyisocyanates are present they may be used in a weight ratio of 1:9 to 9: 1.

The number average molecular weight (Mn) of the polyisocyanate is preferably between 200 and 3,000 (determined by GPC).

The functionality of the polyisocyanate polymer (i.e. the number of isocyanate groups present per molecule) may range from 2 to 10, e.g. 2 to 5.

In one embodiment, a single polyisocyanate is used in the compositions of invention. In an alternative embodiment, a mixture of two or more polyisocyanates is used.

Polyisocyanates for use in the invention can be purchased commercially. Commercial suppliers include Bayer, BASF, Asahi Kasei and suitable polyisocyanates (iii) are sold under trade names such as Desmodur, Duranate, Tolonate, Basonate. Particular examples of suitable commercially available polycarbonates are Desmodur N75 BA, Basonat HB 275B and Wannate HB-75B.

The isocyanate is preferably present in an amount of 30 to 100 wt% solids, more preferably 35 to 80 wt% solids, relative to the total (wet) weight of the second component B).

The isocyanate is preferably present in an amount of at least 90 wt% solids, relative to the total dry weight of the second component B).

The stochiometric ratio of OH to CNO is preferably 0.8:1 to 1.2:1, more preferably 0.9:1 to 1.1:1, most preferably the ratio is 1:1.

As discussed above, it is within the ambit of the invention for the coating composition, specifically component B) of the coating composition, to comprise a mixture of two or more isocyanates. In such embodiments, it will be understood that the above mentioned wt% values refer to the total amount of all isocyanates present.

### Additional Components

The compositions of the invention preferably further comprise other components as detailed below. These typically form part of the first component A).

In order to assist the curing process, the coating composition of the invention preferably comprises a catalyst. Representative examples of catalysts that can be used include transition metal compounds, metal salts and organometallic complexes of various metals, such as, tin, iron, lead, barium, cobalt, zinc, antimony, cadmium, manganese, chromium, nickel, aluminium, gallium, germanium, titanium, boron, lithium, potassium, bismuth and zirconium. The salts preferably are salts of long-chain carboxylic acids and/or chelates or organometal salts.

Examples of suitable tin-based catalysts include for example dibutyltin dilaurate, dibutyltin dioctoate, dibutyltin diacetate or dioctyltin dilaurate. Examples of commercially available tin catalysts include BNT-CAT 400 and BNT-CAT 500 from BNT Chemicals, FASCAT 4202 from PMC Organometallix and Metatin Katalysator 702 from DOW.

Non-limiting examples of suitable zinc catalysts are zinc carboxylates such as zinc neodecanoate, zinc 2-ethylhexanoate, zinc naphthenate and zinc stearate. Examples of commercially available zinc catalysts include K-KAT XK-672 and K-KAT670 from King Industries and Borchi Kat 22 from Borchers.

Non-limiting examples of suitable bismuth catalysts are organobismuth compounds including bismuth carboxylates such as bismuth octoate and bismuth neodecanoate. Examples of commercial organobismuth catalysts are Borchi Kat 24 and Borchi Kat 315 from Borchers. K-KAT XK-651 from King Industries, Reaxis C739E50 from Reaxis and TIB KAT716 from TIB Chemicals.

Examples of suitable titanium catalysts are organotitanium catalysts such titanium naphthenate, tetrabutyl titanate, tetrakis(2-ethylhexyl)titanate, triethanolamine titanate, tetra(isopropenyloxy)-titanate, titanium tetrabutanolate, titanium tetrapropanolate, titanium tetraisopropanolate and chelated titanates such as diisopropyl bis(acetylacetonyl)titanate, diisopropyl bis(ethylacetoacetonyl)titanate and diisopropoxytitanium bis(ethylacetoacetate). Examples of suitable commercially available titanium catalysts are Tyzor IBAY from Dorf Ketal and TIB KAT 517 from TIB Chemicals.

Other suitable catalysts are iron catalysts such as iron carboxylates, lead catalysts such as lead carboxylates, cobalt catalysts such as cobalt carboxylates, manganese catalysts such as manganese carboxylates and zirconium catalysts such as zirconium naphthenate, tetrabutyl zirconate, tetrakis(2-ethylhexyl) zirconate, triethanolamine zirconate, tetra(isopropenyloxy)-zirconate, zirconium tetrabutanolate, zirconium tetrapropanolate and zirconium tetraisopropanolate.

Further suitable catalysts are zirconate esters.

The catalyst may also be an organic compound, such as triethylamine, guanidine, amidine, cyclic amines, tetramethylethylenediamine, 1,4-ethylenepiperazine and pentamethyldiethylenetriamine. Further examples include aminosilanes, such as 3-aminopropyltriethoxysilane and N,N-dibutylaminomethyl-triethoxysilane. Non-metallic catalysts such as tertiary amines, 1,4-diazabicyclo[2.2.2]octane (DABCO) and diazabicycloundecene, may also be employed.

In one preferred embodiment the catalyst is a tin, titanium, zinc, bismuth, guanidine and/or amidine catalyst, more preferably a tin, zinc, bismuth, and/or a combination of thereof.

Preferably the catalyst is present in the coating composition of the invention in an amount of 0.001 to 5 wt% solids based on the total (wet) weight of component A), more preferably 0.01 to 3 wt% solids, most preferably 0.02 to 3 wt% solids. In a most preferred embodiment, the catalyst is a tin based catalyst such as dioctyltin dilaurate, and is present in an amount of 0.02 to 1 wt% solids based on the total (wet) weight of component A).

The coating composition of the present invention may also include other substances commonly used in coating formulations such as fillers, pigments, solvents and other additives such as waxes, dispersants, defoamers, levelling agents, pot life extenders, wetting agents, surface active agents, light stabilizers, UV absorbers, water/moisture scavengers and thixotropic agents.

It is preferable if the coating composition of the invention is opaque to visible light, i.e. not clear or not transparent to the naked eye. Thus, in a preferable embodiment, the coating composition comprises at least one pigment. Examples of pigments include organic and inorganic pigments such as titanium dioxide, iron oxides, carbon black, iron blue, phthalocyanine blue, cobalt blue, ultramarine blue, and phthalocyanine green.

Examples of fillers include talc, dolomite, feldspar, barium sulphate, calcium sulphate, calcium carbonate, silicas, silicates, bentonites and other clays. The preferred fillers are barium sulphate and talc.

In a particular preferable embodiment of the invention, the first component A) further comprises pigments and fillers, more preferably 30 to 60 wt% solids, such as 40 to 50 wt% solids pigments and fillers, relative to the total (wet) weight of component A). In another preferable embodiment the total coating composition (A+B) comprises pigments and fillers, more preferably 15 to 40 wt% solids, such as 22 to 32 wt% solids pigments and fillers, relative to the total (wet) weight of the total coating composition.

Examples of suitable solvents and diluents include aromatic hydrocarbons such as xylene, trimethylbenzene; aliphatic hydrocarbons such as white spirit; ketones such as 2,4-pentanedione, 4-methyl-2-pentanone, 5-methyl-2-hexanone, cyclohexanone; esters such as butyl acetate, 2-methoxy-1-methylethyl acetate and ethyl 3-ethoxypropionate and mixtures thereof.

Solvent preferably makes up 15 to 40 wt% of the total composition (A+B). Any pigments preferably make up 0.25 to 30 wt% solids, e.g. 0.5 to 25 wt% solids of the total (wet) composition (A+B). Other additives typically total less than 20 wt% of the composition (A + B component = the whole kit). Fillers typically preferably make up 0 - 40 wt% solids of the total composition. When the film is cured there is substantially no longer any solvent in the cured film, i.e. less than 0.5 wt% solvent.

### Composition

In a preferred embodiment, the coating composition of the invention is curable at ambient temperature, i.e. when the components are mixed the polyester polyols (i) and (ii) and, if present, the acrylic polyol (iii) and the polyisocyanate will cure at the temperature in the environment in question without the application of heat. That might typically be in the range of 0 to 50°C. Preferably, curing occurs at less than 40 °C, more preferably at room temperature, i.e. in the range 12 to 35 °C. It will be understood that since the coating compositions of the invention are curable they may be referred to as curable coating compositions.

The composition is preferably made up of several parts (e.g. two or more parts) to prevent premature curing and hence is shipped as a kit of parts.

The polyol component (i.e. the total amount of polyols, corresponding to components (i) and (ii) together) and the polyisocyanate component are typically present in amounts corresponding to a ratio of equivalents of isocyanate groups to the total number of hydroxyl groups of from 2:1 to 1:2, preferably from 1.5:1 to 1:1.5, such as 1:1.

The weight ratio of the branched polyester polyol (i) to the polyester polyol (ii) is in the range 1:0.2 to 1:4. The ratio of branched polyester polyol (i) to polyester polyol (ii) based on wt% solids present in component A) if no acrylic polyol (iii) is present is preferably 1:1 to 1:4, more preferably 1:1.5 to 1:3.5, most preferably 1:1.8 to 1:3, relative to the total (wet) weight of the first component A). The ratio of branched polyester polyol (i) to polyester polyol (ii) based on wt% solids if acrylic polyol (iii) is present is preferably 1:0.2 to 1:2.5, more preferably 1:0.25 to 1:1, most preferably 1:0.3 to 1: 0.5, relative to the total (wet) weight of the first component A).

The weight ratio of branched polyester polyol (i) and polyester polyol (ii) to acrylic polyol (iii) based on wt% solids present in component A) is preferably 1:0 to 1:3, more preferably 1:0.5 to 1:1.5, relative to the total (wet) weight of the first component A).

In one embodiment, the volume solids content of the coating composition of the invention is at least 60%.

Alternatively, in other embodiments, the volume solids content of the coating composition is greater than 30%. Preferably, the volume solid content is at least 40%, more preferably at least 50%, such as at least 60%.

In a preferable embodiment, the initial gloss (i.e. prior to exposure) of the coating composition at 60° is is higher than 60 GU (gloss units), preferably higher than 70 GU.

The coating composition of the invention has a volatile organic compound (VOC) content of less than 380 g/L. Preferably the VOC content is less than 375 g/L, more preferably less than 371 g/L, still more preferably less than 361 g/L. VOC content can be calculated using theoretical VOC values from the raw materials in the coating (ASTM D5201-05a)

The component A) of the coating composition has a volatile organic compound (VOC) content of less than 300 g/L. Preferably the VOC content is less than 250 g/L, more preferably less than 221 g/L.

The component B) of the coating composition has a volatile organic compound (VOC) content of less than 590 g/L. Preferably the VOC content is less than 580 g/L, more preferably less than 570 g/L.

The high shear viscosity at 23°C of the total coating composition immediately after mixing is preferably less than 1000 mPa s, more preferably less than 800 mPa s, even more preferably less than 600 mPa s, such as less than 500 mPa s.

The low shear viscosity at 23°C of the coating composition immediately after mixing is preferable in the range of 50 - 100 KU, more preferably 60 - 90 KU.

The polyester polyols (i) and (ii) and, if present, the acrylic polyol (iii) typically form 25 to 60 wt% solids of the total (wet) weight of binder component A), preferably 30 to 50 wt% solids, such as 35 to 45 wt% solids.

The present invention provides a two-component coating composition which can be employed in a close to, or preferably in a 1:1 mixing ratio by volume. The ratio of the first component to the second component is in the range 0.8:1 to 1.2:1 by volume, preferably 0.9:1 to 1.1:1, more preferably 1:1.

Pigment volume concentration (PVC) and its relationship to critical pigment volume concentration (CPVC) is key to aesthetics (appearance, gloss etc.), physical properties (flexibility, abrasion resistance, hardness etc.), and performance properties (permeability, weatherability etc.) of the dry paint film. In connection with PVC and CPVC the term pigment does also include fillers. PVC is the percentage that the actual pigment occupies in the total dry volume of the coating, PVC = volume of pigment/(Volume of pigment + volume of binder) ^{∗}100. CPVC is the volume of pigment where there is just enough binder to provide monomolecular layer of binder around each pigment particle. Lambda (λ) describes the relationship between PVC and CPVC (λ= PVC/CPVC). Further information can be found in e.g. Protective Coatings - Fundamentals of Chemistry and Composition, Clive H. Hare, 1994. A low λ value (<1) results in a tight impermeable high gloss film with good corrosion protection, while a high λ value (>1) results in a flat porous film that lacks corrosion resistance and physical properties. A λ value below but close to 1 will reduce gloss and increase permeability, hence reducing chemical resistance and early water resistance. The λ for the total coating composition (A+B) is in the range 0.2-0.8, more preferably 0.25-0.6. The PVC for the total coating composition (A+B) is in the range of 10 - 35, more preferably 14 - 25.

### Application

The coating compositions of the invention may be utilised to coat a substrate. Suitable substrates include metal substrates, such as steel.

The coating can be applied by any conventional method such as brushing, rolling or spraying (airless or conventional).

The composition of the present invention is a coating composition and thus, where a substrate is coated with more than one layer, the composition of the invention is preferably applied as the outermost layer. The composition of the invention can be applied onto any pre-treatment layers designed for polyurethane coating layers. In a preferred embodiment, the coating of the invention is applied as part of the following coating system: an organic primer such as an epoxy or polyurethane primer coat and a top coat, wherein the coating composition of the invention forms the top coat. It may also be used for touch up of existing top coated surfaces.

Thus, the invention further relates to a process for coating a substrate, comprising applying, preferably by brush or roller, to said substrate a two-component polyurethane coating composition having a VOC of less than 380 g/L when calculated in accordance with ASTM D5201-05a said composition comprising:
A) a first component comprising:
   (i) a branched polyester polyol resin having a hydroxy value of 500 mgKOH/g or more and a hydroxy functionality of 2 or more;
   (ii) a polyester polyol resin having a hydroxy value of 250 mgKOH/g or more and a hydroxy functionality of 2 or more; and
   (iii) optionally one or more acrylic polyol resins having a hydroxy value of at least 50 mgKOH/g; and
B) a second component comprising a polyisocyanate;
   wherein polyester polyols (i) and (ii) are different;
   and allowing said composition to dry and/or cure.

Thus, the invention also relates to a substrate comprising a multilayer paint composition, said substrate comprising the composition of the invention as the outermost layer.

In a further embodiment, therefore, the invention relates to a coating system comprising at least two layers A and B, wherein said layers A and B are adjacent and wherein layer A comprises an organic-based coating that includes at least one epoxy resin or a polyurethane resin; and wherein layer B comprises a top coat composition comprising the two-component polyurethane coating composition as hereinbefore defined.

In this embodiment, any epoxy resin may be used which is suitable for use as a primer layer. The person skilled in the art will be familiar with such resins and they are available commercially.

The invention also relates to a substrate having coated thereon a coating composition or a coating system as hereinbefore defined. Further, it relates to a substrate having coated thereon a coating composition or a coating system as hereinbefore defined, which has been allowed to dry and/or cure.

It is preferred if the compositions of the invention are transported in kits, preferably with the polymer components (i), (ii) and (iii) kept separate from the polyisocyanate component to prevent curing taking place prior to application to the desired surface. The components should ideally be combined in a 1:1 mixing ratio by volume and thoroughly mixed before use. Conventional mixing techniques can be used.

Such kits provide a further aspect of the invention.

The layer formed using the coating composition of the invention preferably has a dry film thickness of 40 to 300 µm, more preferably 40 to 200 µm, such as 50 to 150 µm. It will be appreciated that any layer can be laid down using single or multiple applications of the coating.

The invention also provides for the use of coating compositions as hereinbefore defined as topcoats and/or in maintenance.

Finally, the invention provides the use of coating compositions or coating systems as hereinbefore defined for protecting a metal substrate, e.g. from corrosion.

The invention will now be described with reference to the following non-limiting examples.

### Examples

### Materials and Methods

The polymers and compounds used in the examples were all available commercially and are summarized in Table 1 below.

**Table 1: Materials in the Examples**

| **Name** | **Ingredient** | **Function** | **Supplier** | **Details** |
|---|---|---|---|---|
| Polyether/polyester polyol 1 | 100 wt% branched polyether/polyester polyol | Binder | BASF | OHV 534 mgKOH/g, OH-functionality 3, acid number 2, viscosity 2000-2600mPas, density 1.02 |
| Polyether/polyester polyol 2 | 100 wt% branched polyether/polyester polyol | Binder | BASF | OHV 315 mgKOH/g, acid number 2, OH-functionality 3, Viscosity 700-1400mPas, density 0.970-1.02 |
| Polyester 1 | 100 wt% Polyester | Binder | Alberdingk Boley | OHV 330 mgKOH/g, acid number 1, viscosity 300-700mPas |
| Polycaprolactone triol 1 | 100 wt% Polycaprolactone triol | Binder | Ingevity | OHV 560 mgKOH/g, acid number 1, Mw 300, viscosity 170mPas at 60°C |
| Polycaprolactone triol 2 | 100 wt% polycaprolactone triol | Binder | Ingevity | OHV 310 mgKOH/g, acid number 0.5, Mw 540, viscosity 160mPas at 60°C |
| Hyperbranched polyester 1 | 70 wt% hyperbranched polyester in N-butyl acetate | Binder | BASF | OHV 280 mgKOH/g, acid number 85, viscosity 4400mPas, density 1.1 |
| Polyester 2 | 96 wt% OH-functional high solids polyester resin in N-butyl acetate | Binder | Covestro | OHV 272mgKOH/g, acid number 2, viscosity 4000-7000mPas, density 1.04 |
| Polycaprolactone triol 3 | 100 wt% polycaprolactone triol | Binder | Ingevity | OHV 182 mgKOH/g, acid number 1, Mw 900, viscosity 165mPas at 60°C |
| Hyperbranched polyester 2 | 70 wt% hyperbranced polyester in N-butyl acetate | Binder | BASF | OHV 118 mgKOH/g |
| Acrylic polyol 1 | 75 wt% Acrylic polyol resin in N-butyl acetate | Binder | Allnex | OHV 101 mgKOH/g, acid number 11.5, viscosity 4500-9000mPas, density 1.05 |
| Acrylic polyol 2 | 75 wt% Acrylic polyol resin in N-butyl acetate | Binder | Allnex | OHV 124 mgKOH/g, acid number 7.5, viscosity 2000-3600mPas, density 1,06 |
| Acrylic polyol 3 | 80 wt% Acrylic polyol resin in N-butyl acetate | Binder | Arkema | OHV 55 mgKOH/g, acid number 10, viscosity 6000-9000mPas, density 1.04 |
| Acrylic polyol 4 | 70 wt% Acrylic polyol resin 2,3X70 in xylene | Binder | Arkema | OHV 76 mgKOH/g, acid number 12, viscosity 2000-3000mPas, density 1.04, |
| | Modified polyacrylate | Dispersing agent | BYK | wetting and dispersing additive for solvent-borne |
| | Polyolefin | Defoamer | BYK | Silicone-free, polymer-based defoamer for solvent-free, radiation-curing wood and industrial coatings |
| | MICRONIZED AMIDE WAX - A | Rheology modifier | Arkema | Rheology modifier |
| | Tinuvin 292 is a) Bis (1, 2, 2, 6, 6-pentamethyl-4-piperidyl) sebacate & b) Methyl 1, 2, 2, 6, 6-pentamethyl-4-piperidyl sebacate | HALS | BASF | Liquid hindered amine light stabilizer |
| | Ethyl ethoxy propionate | Solvent | EASTMAN CHEMICAL | Solvent |
| | Solution of a polyether-modified polymethylalkylsiloxane | Surface additive | BYK | Silicone-containing surface additive for solvent-borne coating systems |
| | Leveling polyacrylate 52AB | Surface additive | BYK | Polyacrylate-based surface additive for solvent-borne coating systems |
| | Polymethylsiloxane -B | Surface additive | BYK | Silicone-containing leveling additive with good defoaming properties for solvent-borne coating systems. |
| | Polyether-modified polydimethylsiloxane | Surface additive | BYK | Silicone-containing surface additive for solvent-borne |
| | | Surface additive | BASF | Surface additive |
| Acetyl Acetone | Acetyl Acetone | Pot life extender | ACETO CORPORATION | Pot life extender/solvent |
| xylene | xylene | Solvent | Univar | Solvent |
| | Dioctyltin Dilaurate | Catalyst | TIB CHEMICALS AG | Catalyst |
| | amine functional oligoamides | Rheology modifier | BYK | Rheology modifier |
| Neodecanoic acid | Neodecanoic acid | Additive | MERCK | Fatty acid |
| | Talc | Filler/extender | LIAONING AIHAI TALC CO. LTD | Filler/Extender |
| | TiO2 | Pigment | KRONOS | Pigment |
| | Barium sulphate | Filler/extender | SIBELCO | Filler/Extender |
| Isocyanate | HDI trimer, HDI biuret | Curing agent | BASF | NCO 16.5 |
| | MONO-IC | Moisture scavenger | OMG Borchers GmbH | Water scavenger |
| | Aerosil fumed silica | Rheology modifier | Evonik | Rheology modifier |

### Preparation of coating compositions:

The coating compositions were prepared using a high-speed dissolver.

### Application of coating compositions to substrates:

The coating compositions were applied using airless spray. The wet film thickness was between 100-150 microns in all tests, and the coating composition was cured at 23°C and 50% RH if nothing else is mentioned.

### Determination Methods

Pencil hardness: tested according to ASTM D3363-5 (2011). The coating was applied on a glass panel. For pencil hardness, the range goes from 9H (hardest), 8H 7H, 6H, 5H, 4H, 3H, 2H, H, F, HB, B, 2B, 3B, 4B, 5B, 6B, 7B, 8B to 9B (softest). Assessment criteria applied was as follows:
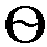 Very good: Above or equal to H
∘ Good: Between F and 3B
X Poor: Below 3B.

Visual inspection: The samples were made in white color and compare with a reference sample. It is a failure if there is a clear mismatch in color between a sample and the reference. Assessment criteria applied was as follows:
+: Match of color with reference sample
-: Mismatch of color with reference sample

Dirt Pick up: A carbon slurry consisting of carbon black pigment, water and liquid soap was applied by brush on the cured coating. Then the slurry was dried for 1 hour at room temperature. After 1 hour, the panel was washed under cold running water using a soft brush. The panel was visually inspected and rated based on remaining dirt immediately after washing. Assessment criteria applied was as follows:
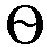 Very good: 90% or more of the dirt was gone after washing
∘ Good: 70% to 89% of the dirt was gone after washing
X Poor: Less than 70% of the dirt was gone after washing

Chemical resistance: tested in accordance with ISO 2812-3:2019; part 3: method using an absorbent medium, and ISO 4628-2:2016; part 2: assessment of the degree of blistering. The coating was applied by airless spray on an epoxy primed panel and cured for 1 and 7 days respectively. The coating was then exposed to an absorbent medium with a certain chemical for 1 hour, covered with a watch glass to avoid evaporation. Visual inspection of matting, blistering, discoloration, and cracking was done immediately after end of the exposure. Assessment criteria applied was as follows:
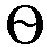 Very good: no damage on the film
∘ Good: slightly matt/soft
X Poor: heavily matt/soft and blistering

Early water resistance: The sample was cured for 2 days before testing. Half of the cured sample was immersed under tap water at room temperature. After exposure for 7 days, the gloss at 60° was measured immediately after the end of exposure. The result was listed as gloss retention and is defined as [(measured gloss / initial gloss) x 100]. Assessment criteria applied was as follows:
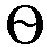 Very good: Gloss retention >95%
∘ Good: gloss retention between 90% and 95%
X Poor: Gloss retention below 90%

QUVA: tested according to ASTM G154, Operation fluorescent ultraviolet (UV) lamp apparatus for exposure to nonmetallic materials. CYCLE 1, Lamp type: UVA-340. 8h UV radiation, 4h condensation at 50°C. Gloss was measured according to NS-EN ISO 2813: 2014 Paints and varnishes - Determination of gloss value at 20 degrees, 60 degrees, and 85 degrees, using 60° geometry. Assessment criteria applied was as follows:
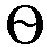 Very good: gloss retention above 50% after running for 2300 hours
X Poor: gloss retention below or equal to 50% after running 2300 hours, as well as samples failing before 2300 hours

The volatile organic compound (VOC) content of the coating compositions was calculated using theoretical VOC values for each raw material in the coating using the following calculation in accordance with ASTM D5201-05a where SG is the density of the coating composition based on the mixed coating composition before curing; VOC[g/L] = ((100-wt%solids)*SG)/100

Adhesion: tested according to ISO 4624 Pull-off adhesion, ISO 16276-2:2007 X-cut and ISO 2409:2020 for cross-cut adhesion. The dry film thickness of the epoxy primer was between 130 - 260 microns in all tests, and overcoating interval between epoxy primer and coating composition was 1 day.

Determination of adhesion by pull-off:
The adhesion of the substrate was tested in accordance with ISO 4624. The maximum tensile strength (in MPa) applied to the coating before adhesion failure between the coating system and substrate was measured using a portable adhesion tester (PAT) and the nature of the adhesive failure was characterized in accordance with ISO 4624, i.e. A, B.. Z equals cohesive failure and A/B, B/C... Y/Z equals adhesive failure.

Determination of adhesion by cross-cut:
The adhesion of the substrate was tested in accordance with ISO 2409. The cross cut was made with a single blade cutter and 3mm spacing. The test result was obtained by using the classification of table 1 given in standard ISO 2409.

Determination of adhesion by X-cut:
Adhesion was tested according to ISO 16276-2:2007 cutting a "X" through the coating, down to the substrate, using a sharp utility knife. The standard specifies to use an adhesive tape to determine how easy it is to lift the paint off the substrate, but for this test the blade of the knife is used to determine how easily the coating lifts off the substrate at the intersection point of the cut. The test result was obtained by using the classification in annex A given in standard ISO 16276-2:2007

Assessment criteria applied for adhesion was as follows:
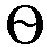 Very good: Pull of value above 5 MPa and no adhesive failure. Cross-cut having class 0 to 1, and X-cut having level 0 to 1
∘ Good: Pull of value above 5 MPa, but can have less than 50% adhesive failure. Cross-cut having class 0 to 3, and X-cut having level 0 to 3
X Poor: Pull of value below 5 mPa and >50 % adhesive failure. Cross-cut having class more than 3 and X-cut having more level 3

### Example 1 - Effect of combining high OHV branched polyester polyol resins and medium OHV polyester polyol resins

The coating compositions described in Table 2 below were prepared (E1 - E3), along with 5 comparative examples (CE1- CE5). The comparative examples employed branched polyester polyol resins having a hydroxy value below 500 mgKOH/g and/or polyester polyols having a hydroxy value below 250 mgKOH/g. Results of the testing are also shown in Table 2.

**Table 2: Compositions (amounts given in wt%) & test results**

| | E1 | E2 | E3 | CE1 | CE2 | CE3 | CE4 | CE5 |
|---|---|---|---|---|---|---|---|---|
| **Component A) amounts in wt% as supplied (amounts in wt% solids)** | | | | | | | | |
| Polyether/polyester polyol 1 | 10(10) | 10(10) | 10(10) | | | 10(10) | 10(10) | |
| Polyether/polyester polyol 2 | | | | 10(10) | | | | 10(10) |
| Polyester 1 | | | | | 10 (10) | | | |
| Polycaprolactone triol 1 | | | 18 (18) | | | | | |
| Polycaprolactone triol 2 | 30 (30) | | | 30 (30) | 30 (30) | | | |
| Hyperbranched polyester 1 | | 30(21) | | | | | | |
| Polycaprolactone triol 3 | | | | | | 30 (30) | | 30 (30) |
| Hyperbranched polyester 2 | | | | | | | 30 (21) | |
| Rheology additive | 1.5 | 1.5 | 1.5 | 1.5 | 1.5 | 1.5 | 1.89 | 1.5 |
| HALS | 0.7 | 0.7 | 0.7 | 0.7 | 0.7 | 0.7 | 0.7 | 0.7 |
| Solvent | 6.5 | 6.5 | 19 | 7 | 7 | 7 | 6 | 7 |
| Surface additives | 5.1 | 5.1 | 5.1 | 5.1 | 5.1 | 5.1 | 3.1 | 5.1 |
| Catalyst (DOTL) | 0.08 | 0.08 | 0.08 | 0.08 | 0.08 | 0.08 | 0.08 | 0.08 |
| Pigments/fillers | 46.1 | 46.1 | 46.1 | 46.1 | 46.1 | 46.1 | 47.9 | 46.1 |
| **Total** | **100** | **100** | **100** | **100** | **100** | **100** | **100** | **100** |
| **VOC [g/L] component A** | 118 | 117 | 292 | 118 | 115 | 118 | 114 | 117 |

| **Component B) components in wt% as supplied (Components in wt% solids** | | | | | | | | |
|---|---|---|---|---|---|---|---|---|
| Isocyanate | 66.6 (50) | 51.13 (38.3) | 70 (52.3) | 56.59 (42.4) | 56.59 (42.4) | 49.2 (36.9) | 40 (30) | 39.24 (29.4) |
| Xylene | | 14 | | 10 | 10 | 15 | 25 | 25 |
| **Total** | 66.6 | **65.13** | 70 | **66.59** | **66.59** | **64.2** | **65** | **64.24** |
| **VOC [g/L] component B** | 265 | 417 | 265 | 372 | 373 | 430 | 529 | 532 |
| **Mixing ratio A:B (vol)** | 1:1 | 1:1 | 1:1 | 1:1 | 1:1 | 1:1 | 1:1 | 1:1 |
| VOC (A+B) [g/L] | 191 | 268 | 279 | 244 | 244 | 273 | 321 | 327 |
| Lambda (λ) (A+B) | 0.35 | 0.41 | 0.27 | 0.46 | 0.4 | 0.28 | 0.34 | 0.3 |
| Ratio (i) to (ii) | 1:3 (1:3) | 1:3 (1:2.1) | 1:1.8 (1:1.8) | 1:3 (1:3) | 1:3 (1:3) | 1:3 (1:3) | 1:3 (1:2.1) | 1:3 (1:3) |
| Visual inspection | + | + | + | + | - | + | + | + |
| **Pencil** hardness (7 days) | ○ | ○ | ○ | X | | X | | ○ |
| Pencil hardness (14 days) | ○ | 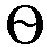 | ○ | X | | X | | X |
| **Dirt pick up** (1 day curing) | ○ | 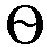 | 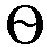 | X | | X | | ○ |
| Dirt pick up (7 days curing) | ○ | 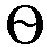 | 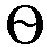 | ○ | | ○ | | 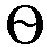 |
| Chemical resistance 10% NaOH (1 day curing) | ○ | 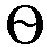 | 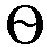 | 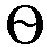 | | 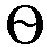 | | 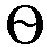 |
| Chemical resistance 10% H₂SO₄ (1 day curing) | ○ | 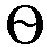 | 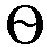 | ○ | | ○ | | 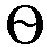 |
| Chemical resistance (1 day curing) | ○ | ○ | 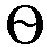 | 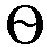 | | ○ | | 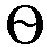 |
| Chemical resistance 10% NaOH (7 days curing) | 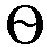 | 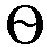 | 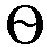 | 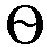 | | 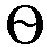 | | ○ |
| Chemical resistance 10% H₂SO₄ (7 days curing) | 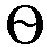 | 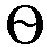 | 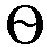 | ○ | | 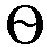 | | 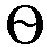 |
| Chemical resistance ammonium chloride (7 days curing) | 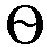 | 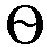 | 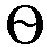 | 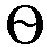 | | 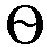 | | 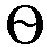 |
| QUVA run (2300 hrs.) | 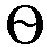 | 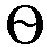 | 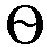 | X¹⁾ | | X²⁾ | X³⁾ | X⁴⁾ |
| Initial gloss at 60° - [GU] | 78 | 80 | 67 | 80 | | 81 | | 73 |
| Early water resistance - gloss retention [%] (2 days curing) | 100 | 100 | 100 | 97 | | 99 | | 90 |

| | | | | | | | | |
|---|---|---|---|---|---|---|---|---|
| 1) Failed at 2300 hours, 2) Failed at 1500 hours, 3) Failed at 800 hours, 4) Failed at 1000 hour | | | | | | | | |

The results in Table 2 show that when a high OHV branched polyether/polyester resin having a hydroxy value above 500 mgKOH/g is combined with a medium OHV polyester polyol resin having a hydroxy value above 250 mgKOH/g, the resulting coatings have a pleasant appearance, a good to very good pencil hardness, and a good to very good dirt pick up already after 1 day of curing. Chemical resistance against acid and base is good to very good already after one day of curing and improve further after 7 days for some coatings. The initial gloss at 60 degrees is high when a high OHV branched polyether/polyester resin having a hydroxy value above 500 mgKOH/g is combined with a medium OHV polyester polyol resin having a hydroxy value of 280 mgKOH/g or 310 mgKOH/g. When using a polyester polyol resin having a high OHV of 561 mgKOH/g, the initial gloss was reduced and is well suited for a semi-gloss product. Furthermore, QUVA was good to very good and early water resistance was excellent when a high OHV branched polyether/polyester resin having a hydroxy value above 500 mgKOH/g is combined with a medium OHV polyester polyol resin having a hydroxy value above 250 mgKOH/g.

In contrast, the coatings made from compositions comprising high OHV branched polyester polyol resins combined with polyester polyol resins having a hydroxy value below 250 mgKOH/g (CE3, CE4) failed in QUVA after 800 and 1500 hours. CE3 also failed in pencil hardness. Compositions comprising branched polyester polyol resins having a hydroxy value below 500 mgKOH/g combined with polyester polyol resins having a hydroxy value above 250 mgKOH/g both failed (CE1, CE2). CE2 failed already by visual inspections and no further tests were carried out. CE1 on the other hand had a satisfactory appearance but failed in both pencil hardness, i.e. it was too soft, and QUVA after 2300 hours. When both the branched polyester polyol resin and the polyester resin polyol had too low hydroxy values (CE5), the coating failed in both pencil hardness and QUVA after 1000 hours. It did also have an early water resistance in the lower end of the acceptable range. It is believed that both a high OHV branched polyester polyol and a medium OHV polyester polyol resin are needed to obtain good pencil hardness and QUVA protection in the coating compositions.

### Example 2 - Effect of combining high OHV branched polyester polyol resins and medium OHV polyester polyol resins with acrylic polyol resins

The coating compositions described in Table 3 were prepared (E4 - E15), along with one comparative example (CE6). The results of testing are shown in Table 3.

**Table 3: Compositions (amounts given in wt%) and test results**

| | **E4** | **E5** | **E6** | **E7** | **E8** | **E9** | **E10** | **E11** | **E12** | **E13** | **E14** | **E15** | **CE6** |
|---|---|---|---|---|---|---|---|---|---|---|---|---|---|
| **Component A) amount is wt% as supplied (amounts in wt% solids)** | | | | | | | | | | | | | |
| Polyether/polyester polyol 1 | 10 (10) | 10 (10) | 10 (10) | 10 (10) | 16.7 (16.7) | 10 (10) | 10.06 (10.06 ) | 10.06 (10.06 ) | 10.06 (10.06) | 10.06 (10.06 ) | 10.06 (10.06) | 10.06 (10.06) | |
| Polycaprolactone triol 2 | | | | | 8.3 (8.3) | | 5.03 (5.03) | 5.03 (5.03) | 5.03 (5.03) | 5.03 (5.03) | 5.03 (5.03) | 5.03 (5.03) | |
| Hyperbranched polyester 1 | 5 (3.5) | 5 (3.5) | 5 (3.5) | 5 (3.5) | | 5 (3.5) | | | | | | | |
| Polyester 2 | | | | | | | | | | | | | 20 (19.2) |
| Acrylic polyol 1 | 25 (18.8) | 12.5 (9.4) | | | 15 (11.3) | | 10.16 (7.6) | 22.24 (16.7) | | 12.07 (9.1) | 7.07 (5.3) | 15.07 (11.3) | 20 (15) |
| Acrylic polyol 2 | | | | 12.5 (9.4) | | 12.5 (9.4) | | | | | | | |
| Acrylic polyol 3 | | 12.5 (10) | 25 (20) | | | | 12.07 (9.7) | | 22.24 (17.8) | 10.17 (8.1) | 15.17 (12.1) | 7.17 (5.7) | |
| Acrylic polyol 4 | | | | 12.5 (8.8) | | 12.5 (8.8) | | | | | | | |
| **Other components** | | | | | | | | | | | | | |
| Rheology modifier | 1.5 | 1.5 | 1.5 | 1.5 | 1.5 | 1.5 | 1.5 | 1.5 | 1.5 | 1.5 | 1.5 | 1.5 | 1.5 |
| HALS | 0.7 | 0.7 | 0.7 | 0.7 | 0.7 | 0.7 | 0.69 | 0.69 | 0.69 | 0.69 | 0.69 | 0.69 | 0.7 |
| Solvent | 7 | 7 | 7 | 7 | 7 | 6 | 7 | 7 | 7 | 7 | 7 | 7 | 7 |
| Surface additives | 5.1 | 5.1 | 5.1 | 5.1 | 5.1 | 5.1 | 5.1 | 5.08 | 5.08 | 5.08 | 5.08 | 5.08 | 5.1 |
| Catalyst (DOTL) | 0.08 | 0.08 | 0.08 | 0.08 | 0.08 | 0.08 | 0.03 | 0.03 | 0.03 | 0.03 | 0.03 | 0.03 | 0.08 |
| Neodecanoic acid | | | | | | 1 | | | | | | | |
| **Pigments/fillers** | 46.1 | 46.1 | 46.1 | 46.1 | 46.1 | 46.1 | 47.9 | 47.9 | 47.9 | 47.9 | 47.9 | 47.9 | 46.1 |
| **Total** | 100 | 100 | 100 | 100 | 100 | 100 | 100 | 100 | 100 | 100 | 100 | 100 | 100 |
| **VOC [g/L] component A** | 209 | 199 | 188 | 220 | 172 | 220 | 206 | 218 | 200 | 210 | 206 | 212 | 202 |

| **Component B) components in wt% as supplied (Components in wt% solids** | | | | | | | | | | | | | |
|---|---|---|---|---|---|---|---|---|---|---|---|---|---|
| Isocyanate | 44.12 (33) | 39.6 (29.7) | 35.06 (26.3) | 40.11 (30.1) | 61.44 (46.1) | 40.11 (30.1) | 41.97 (31.5) | 45 (33.8) | 36.93 (27.7) | 41.31 (31.0) | 39.5 (29.6) | 42.4 (31.8) | 33.39 (25.0) |
| Moisture scavenger | | | | | | | 0.5 | 0.5 | 0.5 | 0.5 | 0.5 | 0.5 | |
| Aerosil fumed silica | | | | | | | 2 | 2 | 2 | 2 | 2 | 2 | |
| Xylene | 20 | 24 | 29 | 24 | 5 | 24 | 20.99 | 17.95 | 23.95 | 20.98 | 22.5 | 20 | 30 |
| **Total** | 64.12 | 63.6 | 64.06 | 64.11 | 66.44 | 64.11 | 65.46 | 65.45 | 63.38 | 64.79 | 64.5 | 64.9 | 63.39 |
| **VOC [g/L] component B** | 480 | 522 | 569 | 520 | 320 | 520 | 484 | 453 | 521 | 486 | 503 | 476 | 581 |
| **Mixing ratio A:B (vol)** | 1:1 | 1:1 | 1:1 | 1:1 | 1:1 | 1:1 | 1:1 | 1:1 | 1:1 | 1:1 | 1:1 | 1:1 | 1:1 |
| VOC (A+B) [g/l] | 344 | 360 | 380 | 370 | 245 | 370 | 347 | 336 | 359 | 348 | 354 | 344 | 393 |
| Lambda (λ) (A+B) | 0.33 | 0.35 | 0.36 | 0.35 | 0.29 | 0.35 | 0.45 | 0.45 | 0.47 | 0.46 | 0.46 | 0.46 | 0.34 |
| Ratio (i) to (ii) | 1:0.5 (1:0.3 5) | 1:0.5 (1:0.3 5) | 1:0.5 (1.03 5) | 1:0.5 (1.03 5) | 1:0.5 (1:0.5 ) | 1:0.5 (1:0.3 5) | 1:0.5 (1:0.5 ) | 1:0.5 (1:0.5 ) | 1:0.5 (1:0.5) | 1:0.5 (1:0.5 ) | 1:0.5 (1:0.5) | 1:0.5 (1:0.5) | 0:4 |
| Ratio (i) + (ii) to (iii) | 1:1.7 (1:1.4 ) | 1:1.7 (1:1.4 ) | 1:1.7 (1:1.5 ) | 1:1.7 (1:1.3 ) | 1:0.6 (1:0.5 ) | 1:1.7 (1:1.3 ) | 1:1.5 (1:1.2 ) | 1:1.5 (1:1.1 ) | 1:1.5 (1:1.2) | 1:1.5 (1:1.2 ) | 1:1.5 (1:1.2) | 1:1.5 (1:1.1) | 1:1 (1:0.8) |
| Visual inspection | + | + | + | + | + | + | + | + | + | + | + | + | + |
| **Pencil** hardness (7 days) | ○ | ○ | ○ | 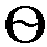 | ○ | 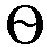 | ○ | ○ | ○ | ○ | 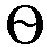 | 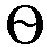 | ○ |
| Pencil hardness (14 days) | 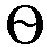 | 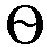 | 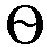 | ○ | ○ | ○ | 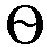 | | | | | | ○ |
| **Dirt pick up** (1 day curing) | ○ | ○ | 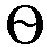 | X | ○ | 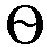 | ○ | | | | | | 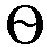 |
| Dirt pick up (7 days curing) | ○ | ○ | 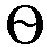 | ○ | ○ | 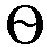 | 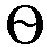 | | | | | | ○ |
| Chemical resistance 10% NaOH (1 day curing) | ○ | 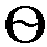 | ○ | ○ | 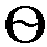 | ○ | 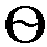 | ○ | 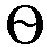 | 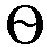 | | | 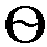 |
| Chemical resistance 10% H2SO4 (1 day curing) | 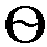 | 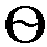 | 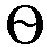 | 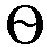 | 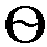 | 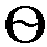 | 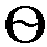 | 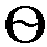 | 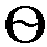 | ○ | | | 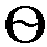 |
| Chemical resistance ammonium chloride (1 day curing) | ○ | 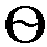 | 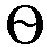 | ○ | 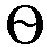 | 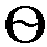 | 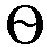 | 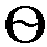 | ○ | 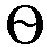 | | | 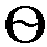 |
| Chemical resistance 10% NaOH (7 days curing) | 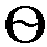 | 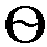 | 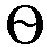 | 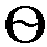 | 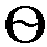 | 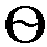 | 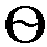 | | | | | | ○ |
| Chemical resistance 10% H2SO4 (7 days curing) | 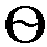 | 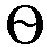 | 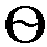 | 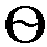 | 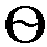 | 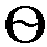 | 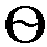 | | | | | | 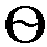 |
| Chemical resistance ammonium chloride (7 days curing) | 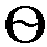 | 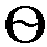 | 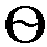 | 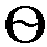 | 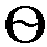 | 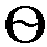 | 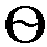 | | | | | | 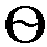 |
| QUVA run (2300 hrs) | 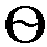 | 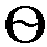 | 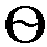 | 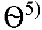 | 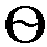 | 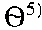 | 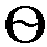 | 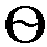 | 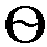 | 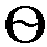 | 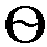 | 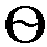 | X²⁾ |
| Adhesion | | | | | | | 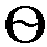 | 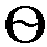 | 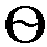 | 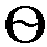 | 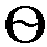 | 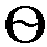 | |
| Initial gloss at 60° [GU] | 86 | 86 | 86 | 88 | 83 | 84 | 87 | | | | | | 88 |
| Early water resistance - gloss retention [%] (2 days curing) | 96 | 94 | 93 | 97 | 92 | 95 | 90 | 97 | 97 | 100 | | | 87 |

| | | | | | | | | | | | | | |
|---|---|---|---|---|---|---|---|---|---|---|---|---|---|
| 2) Failed at 1500 hours, 5) Running, passed 1300 hours | | | | | | | | | | | | | |

The results shown in Table 3 demonstrate that when a high OHV branched polyether/polyester resin having a hydroxy value above 500 mgKOH/g and a medium OHV polyester polyol resin having a hydroxy value above 250 mgKOH/g are further combined with acrylic polyol resins having modest hydroxy values, these compositions perform excellent with regard to visual appearance, pencil hardness, dirt pick up, chemical resistance against acids and alkalines, initial gloss, QUVA and early water resistance. Also, adhesion is excellent. The examples show that a single or a mixture of two different acrylic polyol resins all provide very good topcoat compositions. Examples E6, E9 and E10 show a particular strong performance. In these examples, a high OHV branched polyether/polyester resin having a hydroxy value of 534 mgKOH/g and a medium OHV polyester polyol resin which is a polycaprolactone triol having a hydroxy value of 310 mgKOH/g or a medium OHV polyester polyol resin which is a hyperbranched polyester having a hydroxy value of 280 mgKOH/g are combined either with a single acrylic polyol resin having a hydroxy value of 55 mgKOH/g, with a 1.1:1 mixture (based on wt% solids) of an acrylic polyol resin having a hydroxy value of 124 mgKOH/g and an acrylic polyol resin having a hydroxy value of 76 mgKOH/g, or with a 1:1.3 (based on wt% solids) mixture of an acrylic polyol resin having a hydroxy value of 101 mgKOH/g and an acrylic polyol resin having a hydroxy value of 55 mgKOH/g.

In contrast, a coating made from a medium OHV polyester polyol and an acrylic polyol having a hydroxy value of 101 mgKOH/g showed poor QUVA performance and a low early water resistance. It is believed that a high OHV branched polyester polyol is needed to obtain these qualities in the coating compositions.

## Claims

1. A two-component polyurethane coating composition having a VOC of less than 380 g/L when calculated in accordance with ASTM D5201-05a, said composition comprising:
A) a first component comprising:
(i) a branched polyester polyol having a hydroxy value of 500 mgKOH/g or more and a hydroxy functionality of 2 or more, preferably 3 or more;
(ii) a polyester polyol having a hydroxy value of 250 mgKOH/g or more and a hydroxy functionality of 2 or more, preferably 3 or more;
(iii) optionally one or more acrylic polyols having a hydroxy value of at least 50 mgKOH/g; and
(iv) optionally pigments and fillers, preferably 30 to 60 wt% solids, more preferably 40 to 50 wt% solids pigments and fillers, relative to the total (wet) weight of component A); and
B) a second component comprising a polyisocyanate; wherein polyester polyols (i) and (ii) are different.

2. The two-component coating composition as claimed in claim 1, wherein polyester polyol (i) is a branched polyether/polyester polyol.

3. The two-component coating composition as claimed in claim 1 or 2, wherein polyester polyol (i) is present in an amount of 5 to 25 wt% solids, preferably 8 to 20 wt% solids, relative to the total (wet) weight of component A).

4. The two-component coating composition as claimed in any of claims 1 to 3, wherein polyester polyol (ii) is a branched or hyperbranched polyester polyol, preferably a polycaprolactone polyol, more preferably a polycaprolactone triol.

5. The two-component coating composition as claimed in any of claims 1 to 4, wherein polyester polyol (ii) is present in an amount of 2 to 40 wt% solids, preferably 2.5 to 30 wt% solids, relative to the total (wet) weight of component A).

6. The two-component coating composition as claimed in any of claims 1 to 5, wherein (iii) is a mixture of two acrylic polyols.

7. The two-component coating composition as claimed in any of claims 1 to 6, wherein said one or more acrylic polyol(s) (iii) is present in an amount of 0 to 35 wt% solids, preferably 2 to 30 wt% solids, more preferably 4 to 25 wt% solids, relative to the total (wet) weight of component A).

8. The two-component coating composition as claimed in any of claims 1 to 7, wherein the polyisocyanate is an aliphatic polyisocayante, preferably hexamethylene diisocyanate (HDI) or isophorone diisocyanate (IPDI).

9. The two-component coating composition as claimed in any of claims 1 to 8, wherein the polyisocyanate is present in an amount of 30 to 100 wt% solids, preferably 35 to 80 wt% solids, relative to the total weight of component B).

10. The two-component coating composition as claimed in any of claims 1 to 9, wherein the ratio of the first component to the second component is in the range 0.8:1 to 1.2:1 by volume, preferably 0.9:1 to 1.1:1, more preferably 1:1.

11. A coating system comprising at least two layers A and B, wherein said layers A and B are adjacent and wherein layer A comprises an organic-based coating that includes at least one epoxy resin or a polyurethane resin; and wherein layer B comprises a top coat composition comprising the two-component polyurethane coating composition as defined in any of claims 1 to 10.

12. A substrate having coated thereon a coating composition as claimed in any of claims 1 to 10, or a coating system as claimed in claim 11, which has been allowed to dry and/or cure.

13. A process for coating a substrate, comprising applying, preferably by brush or roller, to said substrate a two-component polyurethane coating composition having a VOC of less than 380 g/L when calculated in accordance with ASTM D5201-05a, said composition comprising:
A) a first component comprising:
(i) a branched polyester polyol resin having a hydroxy value of 500 mgKOH/g or more and a hydroxy functionality of 2 or more;
(ii) a polyester polyol resin having a hydroxy value of 250 mgKOH/g or more and a hydroxy functionality of 2 or more; and
(iii) optionally one or more acrylic polyol resins having a hydroxy value of at least 50 mgKOH/g; and
B) a second component comprising a polyisocyanate; wherein polyester polyols (i) and (ii) are different;
and allowing said composition to dry and/or cure.

14. Use of coating composition as defined in any of claims 1 to 10, or a coating system as claimed in claim 11, for protecting a substrate, e.g. from corrosion.

15. Use of a coating composition as defined in any of claims 1 to 10 for maintenance or as a topcoat.
